# EUROPÄISCHE PATENTSCHRIFT

(11) **EP 2 817 174 B1**
(45) Veröffentlichungstag und Bekanntmachung des Hinweises auf die Patenterteilung: **24.05.2017**
(21) Anmeldenummer: 12810097.1
(22) Anmeldetag: 19.12.2012
(51) Int. Cl.: B60R 11/02, H04R 1/28

(54) **LAUTSPRECHERSYSTEM FÜR EIN KRAFTFAHRZEUG**
LOUDSPEAKER SYSTEM FOR A VEHICLE
SYSTÈME DE HAUT-PARLEUR POUR VÉHICULE À MOTEUR

(30) Priorität: 24.02.2012 DE 102012003772
(43) Veröffentlichungstag der Anmeldung: 31.12.2014
(73) Patentinhaber: Audi AG, 85045 Ingolstadt (DE)
(72) Erfinder: SULOWSKI, Adam, 85057 Ingolstadt (DE)
(74) Vertreter: Schuster, Simon
(86) Internationale Anmeldenummer: PCT/EP2012/005243
(87) Internationale Veröffentlichungsnummer: WO 2013/123955

(56) Entgegenhaltungen:
- WO-A1-2008/055253
- WO-A1-2009/058441
- US-A1- 2001 026 623
- US-A1- 2005 135 642

## Beschreibung

Die Erfindung betrifft ein Kraftfahrzeug mit einem Lautsprechersystem nach der im Oberbegriff von Anspruch 1 näher definierten Art.

Derartige Lautsprechersysteme sind aus dem allgemeinen Stand der Technik bekannt. Aufgrund der begrenzten Bauraumverhältnisse wird dabei der Lautsprecher außerhalb des Innen- bzw. Passagierraums des Kraftfahrzeugs platziert und die erzeugten Schallwellen werden über die Rohrleitung in den Passagierraum eingeleitet. Problematisch dabei ist jedoch, dass in den Zuständen, in denen das Lautsprechersystem nicht betrieben wird, unerwünschte Geräusche, beispielsweise aus dem Motorraum, in den Passagierraum des Kraftfahrzeugs eindringen können, da die Lautsprechermembran nicht in der Lage ist, für eine ausreichende Schalldämmung zu sorgen.

Aus der WO 2009/058441 A1 ist ein Kraftfahrzeug mit einem Lautsprechersystem nach dem Oberbegriff der Anspruchs 1 bekannt. Der Lautsprecher grenzt somit unmittelbar an den Passagierraum an.

Es ist Aufgabe der vorliegenden Erfindung, ein Kraftfahrzeug mit einem Lautsprechersystem zu schaffen, welches eine bessere Ausnutzung des vorhandenen Bauraums ermöglicht und dabei akustische Probleme vermeidet.

Erfindungsgemäß wird diese Aufgabe durch die in Anspruch 1 genannten Merkmale gelöst.

Mit der erfindungsgemäßen, in der Rohrleitung angeordneten Absperreinrichtung ist ein schnelles und einfaches schalldichtes Verschließen der Rohrleitung möglich, so dass verhindert werden kann, dass unerwünschte Störgeräusche durch die Rohrleitung in den Passagierraum gelangen können. Das erfindungsgemäße Lautsprechersystem stellt damit eine sehr einfach zu realisierende Lösung zur Verhinderung von Geräuschproblemen für Fälle dar, in denen es beispielsweise aus Bauraumgründen erforderlich ist, einen Lautsprecher außerhalb des Passagierraums des Kraftfahrzeugs anzuordnen und mittels einer Rohrleitung mit dem Passagierraum zu verbinden.

Dadurch, dass die wenigstens eine Rohrleitung durch eine einen Passagierraum des Kraftfahrzeugs begrenzende Wandung verläuft, so ergibt sich eine sehr einfache Verbindung des Lautsprechers mit dem Passagierraum des Kraftfahrzeugs, so dass der von dem Lautsprecher erzeugte Schall in den Passagierraum transportiert werden kann.

Des Weiteren ist vorgesehen, dass die wenigstens eine Rohrleitung durch eine einen Motorraum des Kraftfahrzeugs begrenzende Wandung verläuft. Eine solche Verbindung des Lautsprechers mit dem Motorraum ermöglicht eine Vergrößerung des dem Lautsprecher zur Verfügung stehenden Volumens, wodurch dieser einen größeren Schalldruck erreichen kann.

Eine besonders vorteilhafte Ausgestaltung der Erfindung kann darin bestehen, dass der Lautsprecher in einem Wasserkasten angeordnet ist, der durch die Wandung zu dem Passagierraum und die Wandung zu dem Motorraum begrenzt ist, wobei durch beide Wandungen jeweils ein Teil der Rohrleitung verläuft, und wobei in wenigstens einem der Teile der Rohrleitung die Absperreinrichtung angeordnet ist. Die Anordnung des Lautsprechers in dem Wasserraum stellt eine besonders gute Bauraumausnutzung dar und ermöglicht außerdem eine einfache Verbindung desselben mit dem Passagierraum einerseits und mit dem Motorraum andererseits.

Eine einfache Ausgestaltung der Absperreinrichtung kann darin bestehen, dass diese ein zwischen einer Offen- und einer Geschlossenstellung verstellbares Absperrorgan aufweist.

Um eine einfache Betätigung des Absperrorgans zu erreichen, kann des Weiteren vorgesehen sein, dass das Absperrorgan mittels einer Steuereinrichtung zwischen der Offen- und der Geschlossenstellung verstellbar ist.

Eine weitere vorteilhafte Ausgestaltung der Erfindung kann darin bestehen, dass das Absperrorgan in Abhängigkeit des Betriebs eines den Lautsprecher versorgenden Verstärkers verstellbar ist. Auf diese Weise kann die Rohrleitung in Betriebszuständen, in denen der Lautsprecher betrieben wird, freigegeben werden und in Betriebszuständen, in denen der Lautsprecher nicht betrieben wird, mittels des Absperrorgans schalldicht verschlossen werden.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine sehr schematische Seitenansicht einer Ausführungsform des erfindungsgemäßen Lautsprechersystems;
- Fig. 2: eine erste Ausführungsform des Absperrorgans des erfindungsgemäßen Lautsprechersystems;
- Fig. 3: eine zweite Ausführungsform des Absperrorgans des erfindungsgemäßen Lautsprechersystems;
- Fig. 4: eine dritte Ausführungsform des Absperrorgans des erfindungsgemäßen Lautsprechersystems;
- Fig. 5: eine vierte Ausführungsform des Absperrorgans des erfindungsgemäßen Lautsprechersystems; und
- Fig. 6: eine fünfte Ausführungsform des Absperrorgans des erfindungsgemäßen Lautsprechersystems.

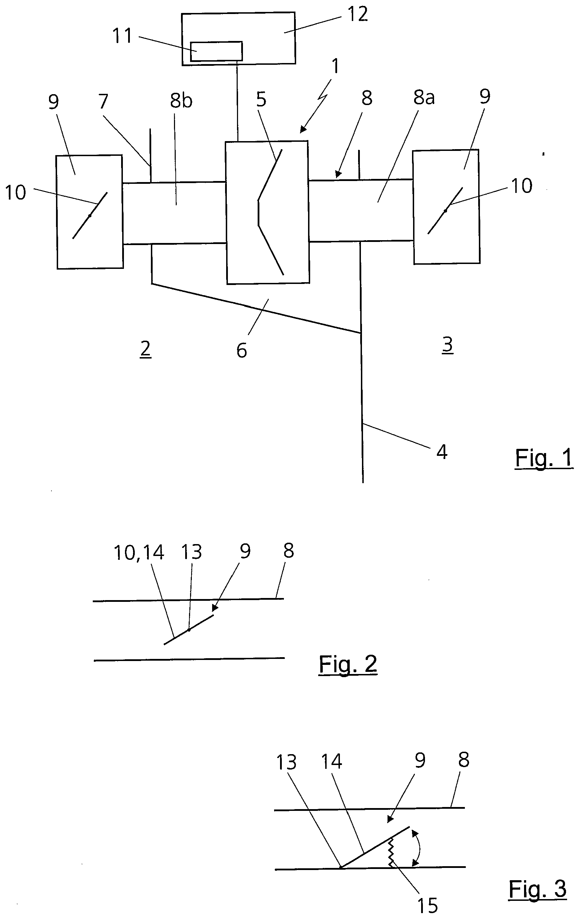

Fig. 1 zeigt ein Lautsprechersystem 1 für ein in seiner Gesamtheit nicht dargestelltes Kraftfahrzeug. Von dem Kraftfahrzeug sind ein Motorraum 2, also der Raum, in dem der nicht dargestellte Verbrennungsmotor des Kraftfahrzeugs angeordnet ist, ein Passagierraum 3 und eine den Passagierraum 3 von dem Motorraum 2 abtrennende, als Stirnwand 4 ausgebildete Wandung dargestellt. Von dem Lautsprechersystem 1 ist im vorliegenden Fall ein Lautsprecher 5 dargestellt, der außerhalb des Passagierraums 3 in einem sogenannten Wasserkasten 6 des Kraftfahrzeugs angeordnet ist, der von dem Motorraum 2 durch eine Wandung 7 abgetrennt ist. Der Lautsprecher 5 ist mittels einer Rohrleitung 8, von der ein Teil 8a durch die Stirnwand 4 verläuft, mit dem Passagierraum 3 verbunden. Auf diese Weise wird der von dem Lautsprecher 5 erzeugte Schall in den Passagierraum 3 eingeleitet, so dass der Schall die sich in dem Passagierraum 3 befindlichen Passagiere erreichen kann. Ein Teil 8b der Rohrleitung 8 verläuft außerdem von dem Lautsprecher 5 ausgehend in die entgegengesetzte Richtung und erstreckt sich durch die Wandung 7 in den Motorraum 2, wodurch das dem Lautsprecher 5 zur Verfügung stehende Volumen vergrößert wird, da dem Lautsprecher 5 über diesen Teil 8b der Rohrleitung 8 auch das Volumen des Motorraums 2 zur Verfügung steht. Es handelt sich also um ein offenes Lautsprechersystem 1.

Insbesondere bietet es sich an, als Subwoofer ausgebildete Lautsprecher 5 außerhalb des Passagierraums 3 anzuordnen und über die Rohrleitung 8 mit dem Passagierraum 3 und dem Motorraum 2 zu verbinden. Die Bezeichnung "Rohrleitung" steht dabei für sämtliche Gebilde, die in der Lage sind, den Lautsprecher 5 akustisch mit einem Raum zu verbinden, in dem der Lautsprecher 5 selber nicht angeordnet ist. Selbstverständlich kann das Lautsprechersystem 1 mehr als den einen Lautsprecher 5 aufweisen, die an beliebigen, nicht dargestellten Orten in dem Kraftfahrzeug angeordnet sein können. Diese weiteren Lautsprecher müssen dabei nicht unbedingt eine offene Bauweise aufweisen. Auch der Lautsprecher 5 kann an einer vollkommen anderen Stelle des Kraftfahrzeugs angeordnet sein, beispielsweise im Bereich eines Kofferraums. Grundsätzlich kommen für das hierin beschriebene Lautsprechersystem 1 mit seinen Komponenten alternativ oder zusätzlich zu der dargestellten Anordnung auch Anordnungen im Radkasten, im Stoßfänger, im Kofferraum oder an anderen geeigneten Orten in Frage.

Um zu verhindern, dass aus dem Motorraum 2 bzw. in dem Fall, in dem die Rohrleitung 8 nicht bis in den Motorraum 2 verläuft, aus dem Wasserkasten 6 Geräusche durch die Rohrleitung 8 in den Passagierraum 3 gelangen können, ist in der Rohrleitung 8 eine Absperreinrichtung 9 zum wenigstens annähernd schalldichten Verschließen der Rohrleitung 8 angeordnet. In dem in Fig. 1 dargestellten Ausführungsbeispiel sind sowohl in dem von dem Lautsprecher 5 zu dem Passagierraum 3 führenden Teil 8a der Rohrleitung 8 als auch in dem zu dem Motorraum 2 führenden Teil 8b der Rohrleitung 8 jeweilige Absperreinrichtungen 9 angeordnet, so dass wahlweise oder gleichzeitig sowohl der Teil 8a als auch der Teil 8b der Rohrleitung 8 mittels der jeweiligen Absperreinrichtung 9 abgesperrt werden kann. Grundsätzlich könnte jedoch auch auf eine der beiden Absperreinrichtungen 9 verzichtet werden.

Wie in Fig. 1 sehr schematisch dargestellt ist, weisen die beiden Absperreinrichtungen 9a und 9b bzw. allgemein die wenigstens eine Absperreinrichtung 9 ein Absperrorgan 10 auf, das zwischen einer Offen- und einer Geschlossenstellung verstellbar ist. Während das Absperrorgan 10 in seiner Geschlossenstellung die Rohrleitung 8 wenigstens annähernd schalldicht verschließt, gibt sie in ihrer Offenstellung die Rohrleitung 8 wenigstens annähernd vollständig frei. Das Absperrorgan 10 sollte an den Querschnitt der Rohrleitung 8 angepasst sein, welche wiederum einen im Prinzip beliebigen Querschnitt aufweisen kann. Fig. 1 zeigt des Weiteren sehr schematisch eine Steuereinrichtung 11, welche zur Ansteuerung des Absperrorgans 10 dient, um dieses zwischen der Offen- und der Geschlossenstellung zu verstellen. Die zur Ansteuerung des Absperrorgans 10 mittels der Steuereinrichtung 11 erforderliche Logik bzw. Software kann an sich bekannt sein und wird daher nicht ausführlich beschrieben.

Die Steuereinrichtung 11 kann Teil eines ebenfalls schematisch dargestellten, den Lautsprecher 5 versorgenden Verstärkers 12 sein. Dadurch ist es möglich, das Absperrorgan 10 in Abhängigkeit des Betriebs des Verstärkers 12 zu verstellen, wodurch es beispielsweise ermöglicht wird, das Absperrorgan 10 zu schließen, wenn der Verstärker 12 und somit der Lautsprecher 5 nicht betrieben wird, und das Absperrorgan 10 zu öffnen, wenn der Verstärker 12 und der Lautsprecher 5 betrieben werden. Dabei kann vorgesehen sein, dass das Absperrorgan 10 automatisch geschlossen wird, wenn der Lautsprecher 5 nicht betrieben wird, d.h. dass die Geschlossenstellung die Grundstellung des Absperrorgans 10 darstellt.

Es kann vorgesehen sein, dass die Steuereinrichtung 11 so ausgebildet ist, dass sie selbständig erkennen kann, ob an dem Lautsprecher 5 ein Signal anliegt. Hierbei kann beispielsweise mittels Integralrechnung festgestellt werden, ob ein Öffnen oder Schließen des Absperrorgans 10 sinnvoll ist. Auf diese Weise könnte vermieden werden, dass das Absperrorgan 10 zu häufig öffnet oder schließt. Beispielsweise könnte auch vorgesehen sein, dass ein Öffnen oder Schließen des Absperrorgans 10 nur eine bestimmte Zeit nach einem vorhergehenden Schaltvorgang desselben erfolgen kann, um ein zu häufiges Schalten des Absperrorgans 10 zu vermeiden.

Grundsätzlich wäre es auch möglich, die Steuereinrichtung 11 so zu betreiben, dass das Absperrorgan 10 in Abhängigkeit bestimmter Soundeffekte geöffnet oder geschlossen bleibt. Beispielsweise könnte bei einer Auswahl "Sprache" das Absperrorgan 10 stets verschlossen bleiben, da zur Übertragung von Sprache möglicherweise kein Subwoofer erforderlich ist.

Des Weiteren wäre es möglich, dem Fahrer des Kraftfahrzeugs die Wahl zu lassen, ob er die Absperreinrichtung 9 überhaupt betreiben möchte, d. h. der Fahrer könnte die Absperreinrichtung 9 mittels eines nicht dargestellten Schalters oder über einen entsprechenden Unterpunkt in einem Bedienmenü ausschalten, so dass die Rohrleitung 8 stets offen wäre.

In den Figuren 2 bis 6 sind verschiedene Ausführungsformen des Absperrorgans 10 schematisch dargestellt. Hierbei zeigen die Figuren 2 und 3 eine Ausführungsform des Absperrorgans 10, bei dem dieses als um eine Drehachse 13 drehbare Klappe 14 ausgebildet ist. Während in Fig. 2 die Klappe 14 um eine sich im Wesentlichen in einem mittleren Bereich derselben befindliche Drehachse 13 drehbar ist, ist bei der Ausführungsform von Fig. 3 die Drehachse 13 an einem Randbereich der Klappe 14 vorgesehen. Dadurch befindet sich die Klappe 14 in ihrem geöffneten Zustand am Rand der Rohrleitung 8, während bei der Ausführungsform von Fig. 2 die Klappe 14 sich in ihrem geöffneten Zustand in der Mitte der Rohrleitung 8 befindet. Des Weiteren ist bei der Ausführungsform von Fig. 3 die Klappe 14 mittels eines Federelements 15 in Richtung ihrer Geschlossenstellung belastet. Dies bedeutet, dass die Klappe 14 durch das Federelement 15 in ihre Geschlossenstellung gedrückt wird, während zum Öffnen der Klappe 14 eine Kraft aufgebracht werden muss, die der Wirkung des Federelements 15 entgegengerichtet ist. Für den Antrieb der Klappe 14 kann beispielsweise ein Elektromotor verwendet werden.

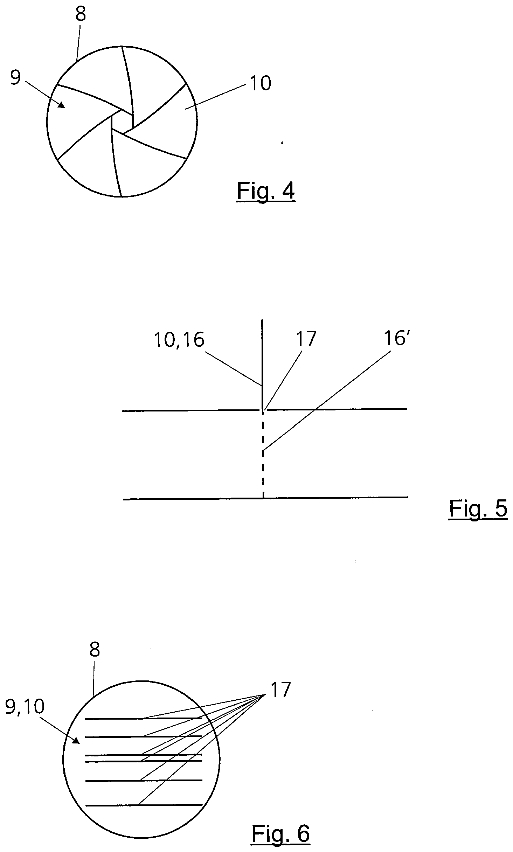

Bei der Ausführungsform des Absperrorgans 10 gemäß Fig. 4 ist dieses als Zentralverschluss ausgebildet, bei dem mehrere Lamellen in der Art einer Blende vom Umfang her konzentrisch nach innen in die Rohrleitung 8 ein- bzw. vom Mittelpunkt her in Richtung des Umfangs ausfahren, um die Rohrleitung 8 freizugeben bzw. zu verschließen. Ein solcher Zentralverschluss hat den Vorteil, dass sich im geöffneten Zustand desselben kein Abschnitt desselben im Querschnitt der Rohrleitung 8 befindet.

Die Ausführungsform gemäß Fig. 5 zeigt das Absperrorgan 10 als in den Querschnitt der Rohrleitung 8 einfahrbare Scheibe 16. Dabei ist die Offenstellung der Scheibe 16 mit der durchgezogenen und die geschlossene Stellung der Scheibe 16 mit der gestrichelten, mit 16' bezeichneten Linie dargestellt. Die Scheibe 16 wird durch einen Schlitz 17 in der Rohrleitung 8 in dieselbe eingefahren. Der Schlitz 17 kann mit Bürsten oder anderen geeigneten Dichtmitteln versehen sein, um ein Austreten des Schalls durch den Schlitz 17 zu verhindern. Auch bei der Scheibe 16 befindet sich im geöffneten Zustand derselben kein Abschnitt derselben im Querschnitt der Rohrleitung 8.

Die Ausführungsform des Absperrorgans 10 gemäß Fig. 6 weist mehrere Lamellen 18 auf, die um jeweilige, nicht näher bezeichnete Drehachsen drehbar sind, um den Querschnitt der Rohrleitung 8 je nach Stellung der Lamellen 18 entweder zu verschließen oder freizugeben.

## Patentansprüche

1. Kraftfahrzeug mit einem Lautsprechersystem (1), mit wenigstens einem Lautsprecher (5), der außerhalb des Passagierraums (3) benachbart zu wenigstens einer Wandung (4,7) des Kraftfahrzeugs angeordnet ist, wobei von dem Lautsprecher (5) wenigstens eine Rohrleitung (8) ausgeht und durch die Wandung (4,7) verläuft, wobei in der wenigstens einen Rohrleitung (8) eine Absperreinrichtung (9) zum wenigstens annähernd schalldichten Verschließen der Rohrleitung (8) angeordnet ist, **dadurch gekennzeichnet, dass** ein Teil (8b) der wenigstens einen Rohrleitung (8) durch eine einen Motorraum (2) des Kraftfahrzeugs begrenzenden Wandung (7) verläuft, und dass ein Teil (8a) der wenigstens einen Rohrleitung (8) durch eine einen Passagierraum (3) des Kraftfahrzeugs begrenzende Wandung (4) verläuft.

2. Kraftfahrzeug nach Anspruch 1,
**dadurch gekennzeichnet, dass**
der Lautsprecher (5) in einem Wasserkasten (6) angeordnet ist, der durch die Wandung (4) zu dem Passagierraum (3) und die Wandung (7) zu dem Motorraum (2) begrenzt ist, wobei durch beide Wandungen (4,7) jeweils ein Teil (8a) der Rohrleitung (8) verläuft, und wobei in wenigstens einem der Teile (8a,8b) der Rohrleitung (8) die Absperreinrichtung (9) angeordnet ist.

3. Kraftfahrzeug nach Anspruch 1 oder 2,
**dadurch gekennzeichnet, dass**
die Absperreinrichtung (9) ein zwischen einer Offen- und einer Geschlossenstellung verstellbares Absperrorgan (10) aufweist.

4. Kraftfahrzeug nach Anspruch 3,
**dadurch gekennzeichnet, dass**
das Absperrorgan (10) mittels einer Steuereinrichtung (11) zwischen der Offen- und der Geschlossenstellung verstellbar ist.

5. Kraftfahrzeug nach Anspruch 3 oder 4,
**dadurch gekennzeichnet, dass**
das Absperrorgan (10) in Abhängigkeit des Betriebs eines den Lautsprecher (5) versorgenden Verstärkers (12) verstellbar ist.

6. Kraftfahrzeug nach Anspruch 3, 4 oder 5,
**dadurch gekennzeichnet, dass**
das Absperrorgan (10) als um eine Drehachse (13) drehbare Klappe (14) ausgebildet ist.

7. Kraftfahrzeug nach Anspruch 3, 4 oder 5,
**dadurch gekennzeichnet, dass**
das Absperrorgan (10) als Zentralverschluss ausgebildet ist.

8. Kraftfahrzeug nach Anspruch 3, 4 oder 5,
**dadurch gekennzeichnet, dass**
das Absperrorgan (10) als in den Querschnitt der Rohrleitung (8) einfahrbare Scheibe (16) ausgebildet ist.

## Claims

1. Motor vehicle with a speaker system (1), having at least one speaker (5) which is arranged outside of the passenger compartment (3) adjacent to at least one wall (4, 7) of the motor vehicle wherein at least one conduit (8) originates from the speaker (5) and runs through the wall (4, 7), wherein
a shut-off device (9) is arranged in the at least one conduit (8) in order to at least approximately seal the conduit (8) in a soundproof manner, **characterised in that** a part (8b) of the at least one conduit (8) runs through a wall (7) delimiting an engine compartment (2) of the motor vehicle and **in that** a part (8a) of the at least one conduit (8) runs through a wall (4) delimiting a passenger compartment (3) of the motor vehicle.

2. Motor vehicle according to claim 1,
**characterised in that**
the speaker (5) is arranged in a water chamber (6) which is delimited by the wall (4) to the passenger compartment (3) and the wall (7) to the engine compartment (2) wherein respectively one part (8a) of the conduit (8) runs through both walls (4, 7) and wherein the shut-off device (9) is arranged in at least one of the parts (8a, 8b) of the conduit (8).

3. Motor vehicle according to claim 1 or 2,
**characterised in that**
the shut-off device (9) comprises a shut-off body (10) that can be displaced between an open and a closed position.

4. Motor vehicle according to claim 3,
**characterised in that**
the shut-off body (10) can be displaced between the open and closed position by means of a control device (11).

5. Motor vehicle according to claim 3 or 4,
**characterised in that**
the shut-off body (10) can be displaced depending on the operation of an amplifier (12) supplying the speaker (5).

6. Motor vehicle according to claim 3, 4 or 5,
**characterised in that**
the shut-off body (10) is designed as a flap (14) that can rotate around a rotational axis (13).

7. Motor vehicle according to claim 3, 4 or 5,
**characterised in that**
the shut-off body (10) is designed as a central shutter.

8. Motor vehicle according to claim 3,4 or 5,
**characterised in that**
the shut-off body (10) is designed as a disc (16) that can retract into the cross-section of the conduit (8).

## Revendications

1. Véhicule automobile avec un système de haut-parleur (1), avec au moins un haut-parleur (5), qui est agencé à l'extérieur de l'habitacle (3) au voisinage d'au moins une paroi (4, 7) du véhicule automobile,
dans lequel au moins un conduit tubulaire (8) part du haut-parleur (5) et s'étend à travers la paroi (4, 7)
et dans lequel un dispositif d'obturation (9) est agencé dans l'au moins un conduit tubulaire (8) afin de fermer au moins à peu près de manière insonorisée le conduit tubulaire (8),
**caractérisé en ce qu'**une partie (8b) de l'au moins un conduit tubulaire (8) s'étend à travers une paroi (7) délimitant un compartiment moteur (2) du véhicule automobile et **en ce qu'**une partie (8a) de l'au moins un conduit tubulaire (8) s'étend à travers une paroi (4) délimitant un habitacle (3) du véhicule automobile.

2. Véhicule automobile selon la revendication 1, **caractérisé en ce que** le haut-parleur (5) est agencé dans une boîte à eau (6) qui est délimitée par la paroi (4) par rapport à l'habitacle (3) et par la paroi (7) par rapport au compartiment moteur (2), une partie (8a) du conduit tubulaire (8) s'étendant à chaque fois à travers les deux parois (4, 7) et le dispositif d'obturation (9) étant agencé dans au moins l'une des parties (8a, 8b) du conduit tubulaire (8).

3. Véhicule automobile selon la revendication 1 ou 2, **caractérisé en ce que** le dispositif d'obturation (9) comporte un organe d'obturation (10) déplaçable entre une position ouverte et une position fermée.

4. Véhicule automobile selon la revendication 3, **caractérisé en ce que** l'organe d'obturation (10) est déplaçable au moyen d'un dispositif de commande (11) entre la position ouverte et la position fermée.

5. Véhicule automobile selon la revendication 3 ou 4, **caractérisé en ce que** l'organe d'obturation (10) est déplaçable en fonction du fonctionnement d'un amplificateur (12) alimentant le haut-parleur (5).

6. Véhicule automobile selon la revendication 3, 4 ou 5, **caractérisé en ce que** l'organe d'obturation (10) est conçu comme un volet (14) pivotant autour d'un axe de rotation (13).

7. Véhicule automobile selon la revendication 3, 4 ou 5, **caractérisé en ce que** l'organe d'obturation (10) est conçu comme un obturateur à diaphragme.

8. Véhicule automobile selon la revendication 3, 4 ou 5, **caractérisé en ce que** l'organe d'obturation (10) est conçu comme un disque (16) pouvant être placé dans la section transversale du conduit tubulaire (8).
